# EUROPEAN PATENT SPECIFICATION

(11) **EP 1 737 684 B1**
(45) Date of publication and mention of the grant of the patent: **01.08.2007**
(21) Application number: 05700500.1
(22) Date of filing: 25.01.2005
(51) Int. Cl.: B60C 27/06, B60C 27/12, B60C 27/16

(54) **A CAR WHEEL ANTISKID DEVICE**
AUTORAD-ANTIBLOCKIERVORRICHTUNG
DISPOSITIF ANTI-BLOCAGE POUR ROUE DE VOITURE

(30) Priority: 28.01.2004 CZ 20040153
(43) Date of publication of application: 03.01.2007
(73) Proprietor: Jakl, Albin, 170 00 Praha 7 (CZ)
(72) Inventor: JAKL, Albin, 170 00 Praha 7 (CZ); KNOBLOCH, Rafael, 130 00 Praha 3 (CZ)
(74) Representative: Fischer, Michael
(86) International application number: PCT/CZ2005/000003
(87) International publication number: WO 2005/072996

(56) References cited:
- AT-B- 384 788
- FR-A- 2 758 293
- US-A- 3 996 984

## Description

### The technical field

The invention refers to a car wheel antiskid device, consisting of a central element, arranged in concentricity with the axis on the outer wheel side and provided with slideways for fit of radial strap carriers embracing the wheel tyre the strap carriers being provided with brackets for a retaining spring.

### State-of-the art

In order to increase the adhesion of the motor vehicles driving wheels, chain belts are commonly used; the chain belts embrace the whole perimeter of the wheel tyre. Fastening the chain belt along the wheel tyre perimeter is a difficult task because it should be carried out with the wheel loaded, its tyre partly contacting the road pavement. The chain belt cannot be attached to the contact area between the tyre and the road pavement which makes both mounting and removal difficult. The engineering capabilities of the chain belts have already been exhausted, however, this drawback has not been removed. There are devices consisting of several parts which may only be mounted to a part of the tyre circumference; this allows for easier mounting/removal of the antiskid devices. Such devices consist of several steel profiles, sheets or other planar elements, which, however, should be connected and pulled together at each wheel so that the steel profiles, sheets or other planar elements could retain their position on the tyre circumference and, after the engagement of the tyre and the road pavement, be shifted neither in the circumferential nor axial direction. Such antiskid device consisting of two segments, each of them being adjusted for placement along the outer wheel side, is known from the document No. CS 243310. Every segment is created by a cross member, which passes into brackets adjusted for bracing the wheel tyre on both its ends. The first segment is connected to the second segment by means of a rod rotationally placed, with its ends, to the ends of the cross bars, and a tensional mechanism linking the other ends of the cross bars by force. The tensional mechanism is fixed to one of the cross bars and fastened to a lock which is arranged on the other cross bar. From the document No. DE 2520125 an antiskid device containing hooks bracing the outer circumferential area of the wheel tyre and being in the radial direction fit in the sliding ways arranged on a circular plate is known. There are juts for joining the circumferential tensional element, e.g. endless rubber rope, on each of the radial parts of every hook. The depicted anti-skid devices allow for easy mounting on the wheel tyre; however, they are made of big dimension segments, especially of big length, whose storage in the baggage compartment of the car may cause problems. The anti-skid devices described above may only be used for a single dimension and immediate tyre dimensions. Any mounting to a tyre of other dimension is not symmetrical and thus the contraction is not reliable. The anti-skid device described above includes, on the outer wheel side, many mechanical parts which may create potential hazard for the environment and which may be clogged with soil or snow. An anti-skid device according to the preamble of claim 1 is disclosed in FR-2758293. The aim of the invention is to remove the drawbacks of the state-of-the art and provide a car wheel anti-skid device which is efficient and simple, consists of simple, space-saving parts which may be easily manufactured, may be easily mounted even in cases of the loaded wheel and may be easily and reliably fixed to the wheel tyre. In addition, the objective of the invention is to provide for a motor vehicle anti-skid device which provides, in a simple way, a cover of the mechanical parts on the outer wheel side, preventing the dirt, soil and snow from access to the wheel disc from the outer side, and improves the vehicle driving properties under extreme conditions of a low bearing capacity ground.

### Object of the invention

The drawbacks of the state-of-the-art solutions may be substantially removed and the objective of the invention may be fulfilled by the car wheel anti-skid device, including radial arms arranged on the outer side of the wheel and provided with sliding ways for fit of radial carriers of straps bracing a wheel tyre, whereas the carriers of the straps are provided with brackets for a retaining spring according to the invention, consisting in that the arms are connected by their ends into a spider of one piece and the circle sectors between the arms or carriers are intervened by correspondingly shaped juts of a bottom of a drum firmly connected to the spider and provided with shaped anti-skid surface on its perimeter. The drum bottom juts are conveniently arranged around the axial central hole in the drum bottom through which there passes a connecting bolt for binding to the axial central hole of the spider. The circumferential part of the drum is conveniently arranged on the outer side of the tyre perimeter. The circumferential part of the drum has conveniently smaller diameter than the outer tyre diameter and the circumferential part is conically extended in the tyre direction. The car wheel antiskid device made in accordance with the aspects of the invention may be easily mounted on the tyre even in cases of loaded vehicle wheel and may be easily and reliably fastened to the wheel tyre ; in addition, it is simple, consists of simple and easily manufactured parts, it is space-saving and very efficient; the drum of the antiskid device covers the mechanical parts, the frontal part of the wheel and, possibly, the entire wheel, thus preventing from penetration of snow/soil to the wheel rim from the outer side. The car wheel antiskid device made in accordance with the aspects of the invention allows improving the driving properties of the vehicle under extreme conditions of low bearing capacity ground in a simple way. Even in case the wheels are considerably burrowed into the ground, the device may be mounted on the outstanding wheel parts. Due to its small size, low weight, easy manipulation and undemanding maintenance, the car wheel antiskid device may form a part of the all-year vehicle kit for all categories of vehicles. Also, the car wheel antiskid device appropriately covers the mechanical parts and prevents dirt, soil and snow from access to the mechanical parts and wheel disc. The car wheel antiskid device drum may form a casing in which the mechanical parts of the antiskid device may be stored. The care wheel antiskid device drum may be conveniently made of rubber and its dimensions may be adjusted so that the drum might be put on the straps embracing the wheel tyre. The mounting of the antiskid device made in accordance with the aspects of the invention is simple and the individual parts of the antiskid device are well storable.

### Brief description of the drawings

The motor vehicle antiskid device may be explained in detail by means of drawings, from which the individual figures demonstrate the following views:
Fig. 1 - frontal view of the spider with the strap carrier,
Fig. 2 - side view on the spider with the strap carriers,
Fig. 3 - side view of the antiskid device,
Fig. 4 - frontal view of the drum,
Fig. 5 - axial section of the antiskid device with the drum,
Fig. 6 - side view of another version of the antiskid device with a drum.

### Examples of the embodiment

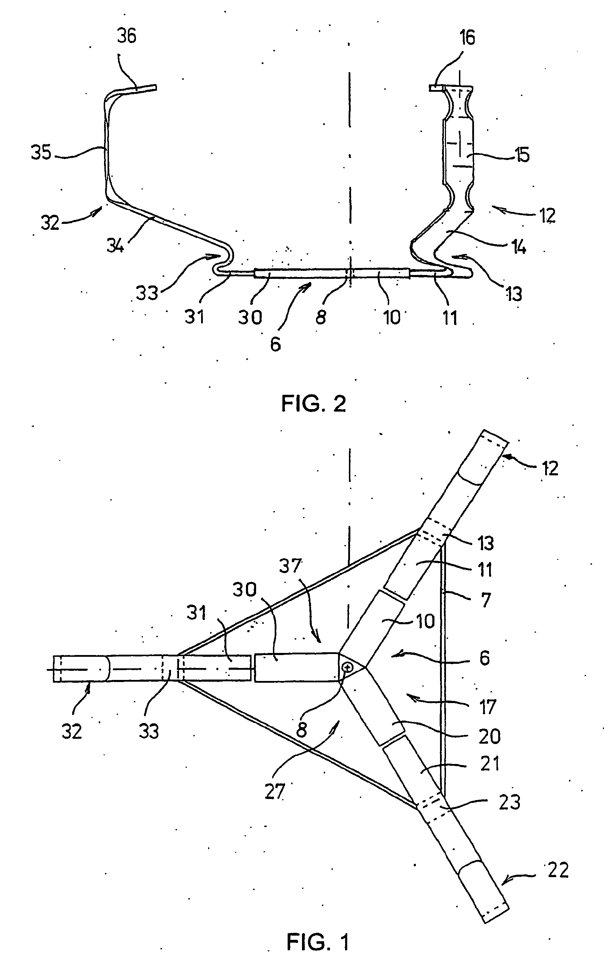

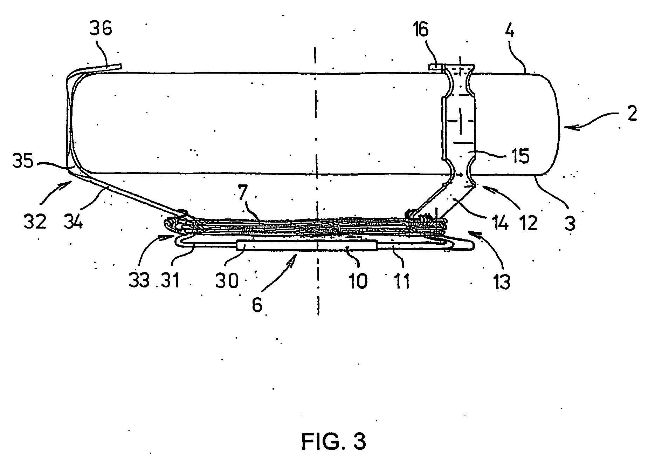

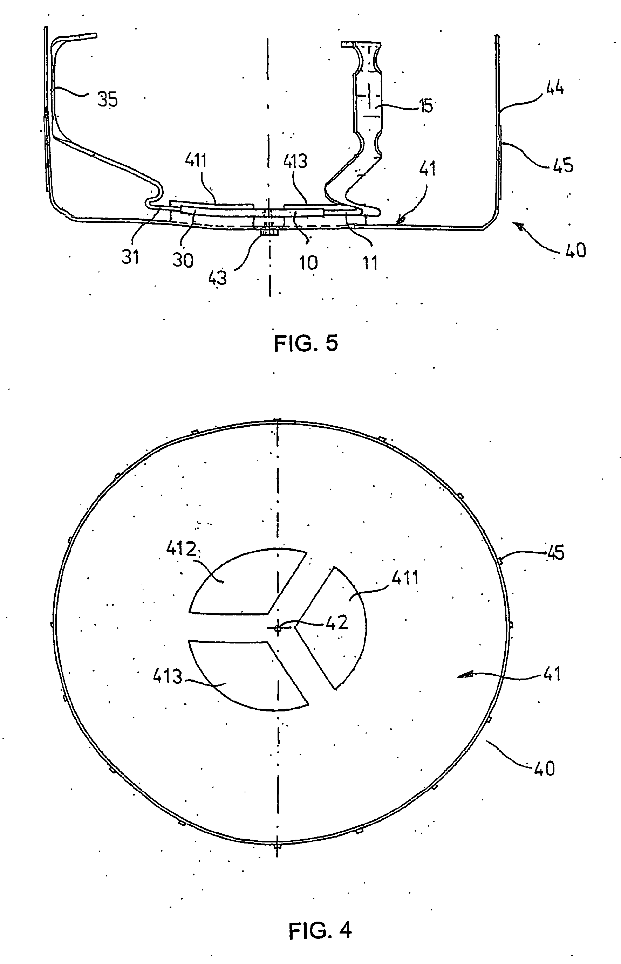

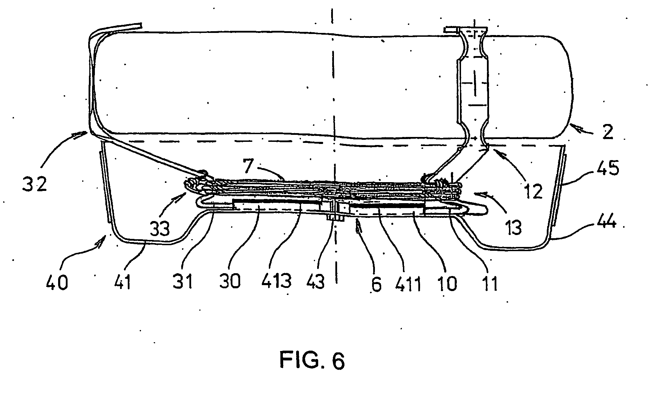

The motor vehicle antiskid device corresponding to Fig. 1 consists of a spider 6, having three arms 10, 20, 30 forming 120 ° angles. The area between the arms 10, 20, 30 forms sectors 17, 27, 37. The arms 10, 20, 30 are hollow and the carriers 11, 21, 31, made for example from steel strips, are inserted in them in radial direction. The carriers 11, 21, 31 may be freely inserted into the arms 10, 20, 30 of the spider 6. The carriers 11, 21, 31 pass through the brackets 13, 23, 33 to the straps 12, 22, 32. In the given example, the brackets 13, 23, 33 are made by shaping the carriers 11, 21, 31 in both radial and axial direction so that a fold to join the retaining spring 7 was made. The folds 13, 23, 33 may also bear another shape or they can also be made by axial juts only. However, they must provide radial support for the retaining spring 7 fit. The retaining spring 7 is conveniently made of flexible stretchable rope which may be endless or may be provided with hooks for fastening the carriers 11, 21, 31 on its end. The traction flexibility of the retaining spring 7 guarantees firm grip of the antiskid device on the wheel tyre. The carriers 11, 21, 31 pass through the brackets 13, 23, 33 to the straps 12, 22, 32, which may only be visible in the frontal view of Fig.1 as a dashed line at the end of the carriers 11, 21, 31. The assembly procedure of the motor vehicle antiskid device consists of the following steps: the carriers 11, 21, 31 shall be inserted into the arms 10, 20, 30 of the spider 6, then they shall be put on the outer side part of the wheel (not depicted), the straps 12, 22, 32 shall be fastened to the wheel tyre, the carriers 11, 21, 31 shall be inserted into the arms 10, 20, 30 and the retaining spring 7 shall be extended to the brackets 13, 23, 33. By stretching the retaining spring tension to the carriers 11, 21, 31 shall develop, the carriers being then inserted into the arms 10, 20, 30 and the straps 12, 22, 32 being fastened to the wheel tyre with initial tension. In Fig. 2, the spider 6 with two visible arms 10, 30, into which the carriers 11, 31 are inserted, may be seen in the side view. The carriers 11, 31 pass into the straps 12, 32 created by the business ends 15, 35 and the supporting ends 16, 36 through the brackets 13, 33 and the entering parts 14, 34. The supporting ends 16, 36 are intended to be leaned against the inner side part of the wheel tyre. In Fig. 2 there is a visible axial hole 8 made in the axial axis of the spider 6. In the side view of the antiskid device in Fig. 3 all the above-mentioned elements in assembled form may be seen. The straps 12, 32 with business ends 15, 35 and supporting ends 16, 36, leaned against the inner side part 4 of the tyre 2 are radially put on the tyre 2. The straps 12, 32 pass to the brackets 13,33, made on the radially arranged carriers 11, 31, through the entering ends. The retaining spring 7 is coiled around the brackets 13, 33 and the bracket 23 (not visible in Fig. 3). The visible carriers 11, 31 are inserted into the arms 10, 30 of the spider 6. In the frontal view of the drum 40 in Fig. 4, the juts 411, 412, 413, which extend into the sectors of the antiskid device spider (not depicted), may be seen. The drum 40 is conveniently manufactured from thick-walled sheet. The axial axis of the drum 40 an axial hole 42 for connection with the antiskid device spider (not depicted) is made. In Fig. 5, the shape of the drum 40 in the axial section is clearly visible. The bottom 41 of the drum 40 passes into the circumferential part 44 which is provided with the antiskid surface 45 from the outer side. A bolt 43 for connection with the spider 6, into which arms 10, 30 the carriers 11, 31 of the antiskid device straps 15, 35 are inserted, passes through in the axis. The bottom 40 may be flat or conveniently shaped so that, according to Fig. 5, its shape enables the circumferential part 44 to be as wide as possible. In the bottom 41 the juts 411, 413, outstanding radially in the direction to the wheel (not depicted), are visible. The visible juts 411, 413 expand into the sectors 17, 27, 37 (not depicted), visible in Fig. 1. In the side view of the antiskid device with the drum in Fig. 6, the complete assembly, containing the visible parts, as the tyre 2, the straps 12, 32 bracing the tyre 2, the brackets 13, 33, into which the retaining spring 7 is fit, may be seen. The brackets 13, 33 pass into the carriers 11, 31, which are inserted into the arms 10, 30 of the spider 6. The spider 6 is connected with the bottom 41 of the drum 40, which juts 411, 413 extend into the sectors between the arms 10, 30 of the spider 6, by the axial bolt 43, arranged in the axis. The circumferential part 44 of the drum 40 is provided with the antiskid surface 45. The perimeter of the drum 40 is smaller than the perimeter of the wheel, therefore the antiskid device may also be used in cases of alternating road pavement surfaces. The shape of the circumferential part is conveniently extended in the direction to the wheel tyre 2. The juts 411, 412, 413 of the bottom 41 may have, in accordance with Fig. 4, such dimension/shape that they enter into the whole area of the sectors 17, 27, 37 given by Fig. 1. However, the juts 411, 412, 413 may only be made by sheet edges, bowed into the direction of the antiskid device spider so that they expand into the sectors 17, 27, 37 given by Fig. 1. In that case the position of the drum 40 shall be adjusted by slightly turning so that the juts 411, 413 given by Fig. 5 adhered to the side parts of the carriers 11, 31. The given example does not limit any further versions of the invention in which e.g. the straps may have another shape, embracing the wheel tyre along longer perimeter of the tyre, and the drum can be made of rubber of suitable quality and with such dimensions so that the drum might be pulled over the straps along the tyre perimeter.

## Claims

1. A car wheel anti-skid device, including radial arms (10, 20, 30) arranged on the outer side of the wheel and provided with sliding ways for fit of radial carriers (11, 21, 31) of straps (12, 22, 32) bracing a wheel tyre (2), whereas the carriers (11, 21, 31) of the straps (12, 22, 32) are provided with brackets (13, 23, 33) for a retaining spring (7),
**characterised by** that,
the arms (10, 20, 30) are connected by their ends into a spider (6) of one piece and the circle sectors (17 27, 37) between the arms (10, 20, 30) or carriers (11, 21, 31) are intervened by correspondingly shaped juts (411, 412, 413) of a bottom (41) of a drum (40) firmly connected to the spider (6) and provided with shaped anti-skid surface (45) on its perimeter.

2. A car wheel anti-skid device according to the claim 1,
**characterised by**
the juts (411, 412, 413) of the bottom (41) of the drum (40) arranged around an axial central hole (42) of the bottom (40) of the drum (41) through which a connecting bolt (43) going for connection to an axial central hole (8) of the spider (6).

3. A car wheel anti-skid device according to the claim 1 or 2,
**characterised by**
a circumferential part (44) of the drum (40) arranged on the outer side of the perimeter of the tyre (2).

4. A car wheel anti-skid device according to the claim 1 or 2,
**characterised by**
the circumferential part (44) of the drum (40) having a diameter smaller than the outer diameter of the tyre (2).

5. A car wheel anti-skid device according to the claim 4,
**characterised by**
the circumferential part (44) being conically extended in the direction to the tyre (2).

## Patentansprüche

1. Antirutschvorrichtung eines Automobilrads, die auf der Radaußenseite radial angeordnete Arme(10, 20, 30) mit Führungen für den Schiebesitz radialer Träger (11, 21, 31) der Bügel (12, 22, 32) beinhaltet, die den Reifen (2) des Rades umfassen, wobei die Träger (11, 21, 31) der Bügel (12, 22, 32) mit Befestigungsvorrichtungen (13, 23, 33) für eine Sicherungsfeder (7) versehen sind,
**gekennzeichnet dadurch, dass**
die Arme (10, 20, 30) mit ihren Enden an einen Stern (6) aus einem Stück angebunden sind und in die Sektoren (17, 27, 37) zwischen den Armen (10, 20, 30) oder Trägern (11, 21, 31) die der Form entsprechenden Vorsprünge (411, 412, 413) des Bodens (41) der Trommel (40) reichen, die fest mit dem zentralen Element (6) verbunden und an ihrem Umfang mit der profilierten Antirutschoberfläche (45) versehen ist.

2. Antirutschvorrichtung eines Automobilrads nach Anspruch 1,
**gekennzeichnet dadurch, dass**
die Vorsprünge (411, 412, 413) des Bodens (41) der Trommel (40) um die axiale Mittelöffnung (42) des Bodens (41) der Trommel (40) angeordnet sind, durch die eine Verbindungsschraube (43) zur Verbindung mit der axialen Mittelöffnung (8) des Sterns (6) führt.

3. Antirutschvorrichtung eines Automobilrads nach Anspruch 1 oder 2,
**gekennzeichnet dadurch, dass**
der Umfangteil (44) der Trommel (40) auf der äußeren Seite des Reifenumfangs (2) angeordnet ist.

4. Antirutschvorrichtung eines Automobilrads nach Anspruch 1 oder 2,
**gekennzeichnet dadurch, dass**
der Umfangteil (44) der Trommel (40) einen kleineren Durchmesser hat, als der Außendurchmesser des Reifens (2).

5. Antirutschvorrichtung eines Automobilrads nach Anspruch 4,
**gekennzeichnet dadurch, dass**
sich der Umfangteil (44) in Richtung zum Reifen (2) kegelförmig verbreitert.

## Revendications

1. Système antidérapant de la roue d'un véhicule, comprenant, côté extérieur de la roue, des branches à disposition radiale (10, 20, 30) avec glissières pour placement des supports radiaux (11, 21, 31) des étriers (12, 22, 32) embrassant le bandage (2) de la roue, les supports (11, 21, 31) des étriers (12, 22, 32) équipés d'attaches (13, 23, 33) pour le ressort de blocage (7),
**caractérisé en ce que**
les branches (10, 20, 30) sont, par leurs extrémités, rassemblées en étoile (6) d'une pièce et, les secteurs (17, 27, 37) entre les branches (10, 20, 30) ou les supports (11, 21, 31) portent des saillies (411, 412, 413) dont la forme correspond au fond (41) du tambour (40) rassemblé fermement avec l'élément central (6) et muni sur sa circonférence de surface antidérapante (45).

2. Système antidérapant de la roue d'un véhicule conformément à la revendication 1,
**caractérisé en ce que**
les saillies (411, 412, 413) du fond (41) du tambour (40) sont disposées autour d'une ouverture axiale centrale (42) du fond (41) du tambour (40), traversée par une vis d'assemblage (43) pour réassemblage avec l'ouverture axiale centrale (8) de l'étoile (6).

3. Système antidérapant de la roue d'un véhicule conformément aux revendications 1 ou 2,
**caractérisé en ce que**
la partie périphérique (44) du tambour (40) est disposée sur la partie extérieure de la circonférence du bandage (2).

4. Système antidérapant de la roue d'un véhicule conformément aux revendications 1 ou 2,
**caractérisé en ce que**
la partie périphérique (44) du tambour (40) a un diamètre inférieur au diamètre extérieur du bandage (2).

5. Système antidérapant de la roue d'un véhicule conformément à la revendication 4,
**caractérisé en ce que**
la partie périphérique (44) s'élargit, de manière conique, en direction du bandage (2).
